# EUROPEAN PATENT APPLICATION

(11) **EP 1 879 365 A2**
(43) Date of publication of application: **16.01.2008**
(21) Application number: 07102434.3
(22) Date of filing: 15.02.2007
(51) Int. Cl.: H04M 1/24

(54) **Mobile communication device**

(30) Priority: 06.07.2006 CN 200610103035
(71) Applicant: Inventec Corporation, Shih-Lin District Taipei (TW)
(72) Inventor: Lu, Chih Kuo, 111, Taipei (TW)
(74) Representative: Patentanwälte Kewitz & Kollegen

(57) **Abstract**

A mobile communication device (1) includes a case (11), a display module (12), at least one sliding track and a monitor adjusting key. The display module is disposed on the case and displays a display frame, which includes a first frame (3211), a second frame (3212) and a separating line (3213) for separating the first frame from the second frame. The sliding track (33) is disposed on one side of the case and near the display module. The monitor adjusting key (34) is disposed on the sliding track to correspondingly control the separating line.

## Description

### BACKGROUND OF THE INVENTION

### Field of Invention

The invention relates to a communication device, and, in particular, to a mobile communication device.

### Related Art

Because the personal electronic products are developing rapidly, the requirements on product quality, multi-functionality and portability have been greatly increased. Also, the current electronic communication industry is developing day by day, and the mobile communication device has become an indispensable personal electronic product. Mobile communication devices have various integrated functions. In addition to the capacity to make or receive a call and having a miniaturized structure, many additional features are required. Of course, a large display screen there is no exception to these desired features.

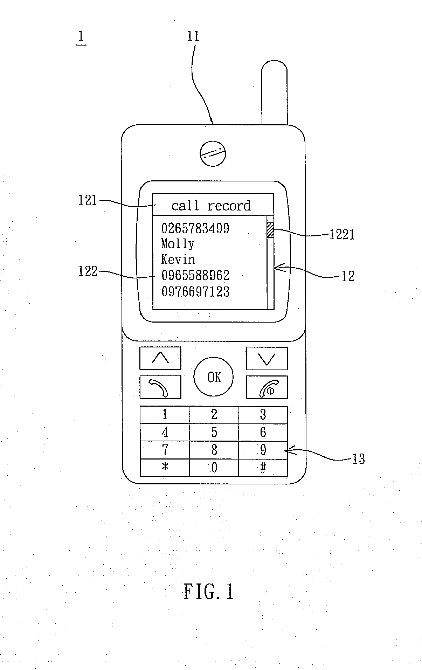

Referring to FIG. 1, a conventional mobile communication device 1, which is a vertical mobile phone, includes a mobile phone body 11, a display screen 12 and an operation interface 13. The display screen 12 and the operation interface 13 are disposed on the mobile phone body 11 proximal to each other. The display screen 12 has a main screen region 121 and a sub-screen region 122. Usually, the main screen region 121 is disposed above the sub-screen region 122, and the sub-screen region 122 has a scroll bar 1221, which may be moved up and down to display more display contents on the sub-screen region 122 of limited dimension. In general, the main screen region 121 frequently displays higher order messages, such as an operation menu, and the sub-screen region 122 displays detailed messages, such as a caller ID, time and the like. In the following example, the main screen region 121 displays the "call record", and the sub-screen region 122 displays telephone numbers or names corresponding to the telephone numbers of all call records. When the user wants to browse the information of the sub-screen region 122, he or she usually utilizes the operation interface 13 to move the scroll bar 1221 to display a portion of the display contents on the sub-screen region 122. The standard dimensions of the main screen region 121 and the sub-screen region 122 are set when the mobile communication device 1 is manufactured. When the user wants to find or look up some information from the display contents on the sub-screen region 122, he or she has to control the operation interface 13 to move the scroll bar 1221 slowly and examine the information carefully because the icons or fonts of the display contents are too small.

In addition, the standard dimensions of the main screen region 121 and the sub-screen region 122 also cannot be changed according to the user's requirements, and the display contents of the sub-screen region 122 cannot be scaled up to facilitate the search, thereby complicating the operation and detracting from the convenience.

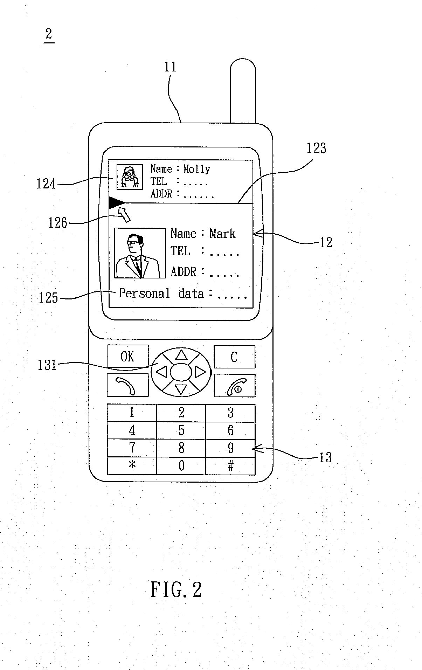

To solve the above-mentioned problems, another mobile communication device 2 shown in FIG. 2 has the same structure as that of the mobile communication device 1 (FIG. 1) except that the display screen 12 has a separating line 123 for separating the display screen 12 into a first region 124 and a second region 125. Thus, pushing direction keys 131 of the operation interface 13 can control the movement of a cursor 126 on the display screen 12. Alternatively, when the display screen 12 is a touch monitor, the movement of the cursor 126 may be controlled through a touch pen (not shown). When the cursor 126 is moved, the separating line 123 can be controlled to move in a direction toward the first region 124 or the second region 125. For example, when the user needs to look for some data in the second region 125, he or she can operate the direction keys 131 to move the separating line 123 toward the first region 124, and the display contents of the first region 124 are gradually scaled down while the display contents of the second region 125 are gradually scaled up. Thus, the user can see the data clearly. As mentioned hereinabove, because the separating line 123 in the display screen 12 is implemented using a software program, the user has to use the direction keys 131 or the touch pen to move the separating line 123 in order to search for or scale up some data. In this manner, the operation becomes difficult and the convenience is greatly diminished. If the touch pen is used, the touch monitor has to be provided, and the cost is thus increased.

Thus, it is an important subject of the invention to provide a mobile communication device capable of enabling the user to control the sizes of different regions on the display screen, and to scale up the display contents in the different regions on the screen at will.

### SUMMARY OF THE INVENTION

In view of the foregoing, the invention is to provide a mobile communication device which enhances the convenience of use by automatically controlling the size of different regions on a display screen and scaling up the display contents in the different regions of the display screen at will.

To achieve the above, the invention discloses a mobile communication device including a case, a display module, at least one sliding track and a monitor adjusting key. In this case, the display module is disposed on the case and displays a display frame, wherein the display frame includes a first frame, a second frame and a separating line for separating the first frame from the second frame. The sliding track is disposed on one side of the case and near the display module. The monitor adjusting key is disposed on the sliding track and correspondingly controls the separating line.

As mentioned above, the mobile communication device of the invention has the display module disposed on the case, and the separating line for dividing the display frame of the display module into the first frame and the second frame. In addition, the sliding track is disposed on one side of the case, and the monitor adjusting key disposed on the sliding track is utilized to adjust the separating line on the display module to scale up or down the first frame or the second frame. Compared with the prior art, the invention utilizes the monitor adjusting key to control the separating line on the display frame to move the separating line toward the first frame or the second frame. Furthermore, when the first frame is scaled down, the second frame is scaled up, and the display patterns or display texts on the second frame are scaled up, or vice versa. According to this method, the user can easily adjust the monitor adjusting key and adjust the size of the first frame or the second frame at will so as to look for the desired data quickly, clearly and conveniently.

### BRIEF DESCRIPTION OF THE DRAWINGS

The invention will become more fully understood from the detailed description given herein below illustration only, and thus is not limitative of the present invention, and wherein:

FIG. 1 is a schematic illustration showing a conventional mobile communication device;

FIG. 2 is a schematic illustration showing another conventional mobile communication device;

FIG. 3A is a schematic illustration showing a mobile communication device having a sliding track and a monitor adjusting key moved toward a first frame according to a preferred embodiment of the invention;

FIG. 3B a schematic illustration showing the mobile communication device having the sliding track and the monitor adjusting key moved toward a second frame according to the preferred embodiment of the invention;

FIG. 4A is a schematic illustration showing the mobile communication device having two sliding tracks and the monitor adjusting key moved toward the first frame according to the preferred embodiment of the invention;

FIG. 4B is a schematic illustration showing the mobile communication device having the two sliding tracks and the monitor adjusting key moved toward the second frame according to the preferred embodiment of the invention; and

FIG. 5 is a flow chart showing a monitor adjusting method according to the preferred embodiment of the invention.

### DETAILED DESCRIPTION OF THE INVENTION

The present invention will be apparent from the following detailed description, which proceeds with reference to the accompanying drawings, wherein the same references relate to the same elements.

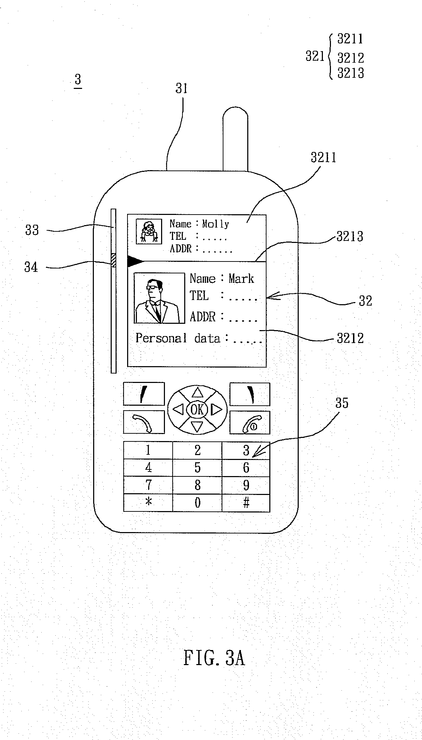

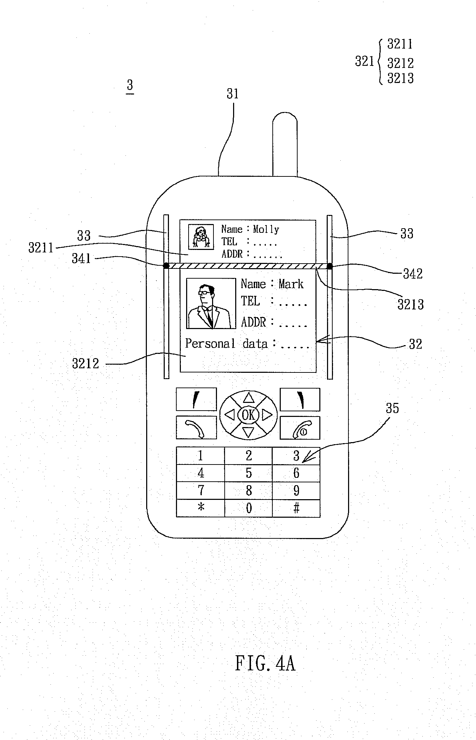

Referring to FIGS. 3A to 4B, a mobile communication device 3 according to a preferred embodiment of the invention includes a case 31, a display module 32, at least one sliding track 33 and a monitor adjusting key 34. The mobile communication device 3 of this embodiment may include, without limitation, a mobile phone and a personal digital assistant. In this example, the device 3 is a mobile phone.

In this embodiment, the display module 32 is disposed on the case 31 and displays a display frame 321, which includes a first frame 3211, a second frame 3212 and a separating line 3213 for separating the first frame 3211 from the second frame 3212. The display module 32 of this embodiment may be, without limitation, a touch display module for the handwritten input.

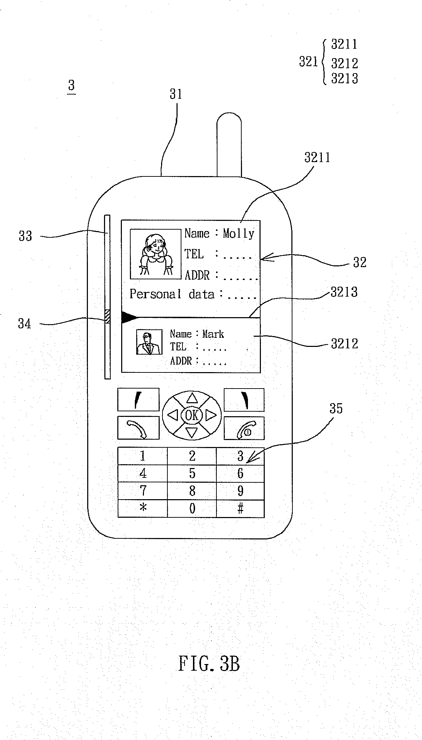

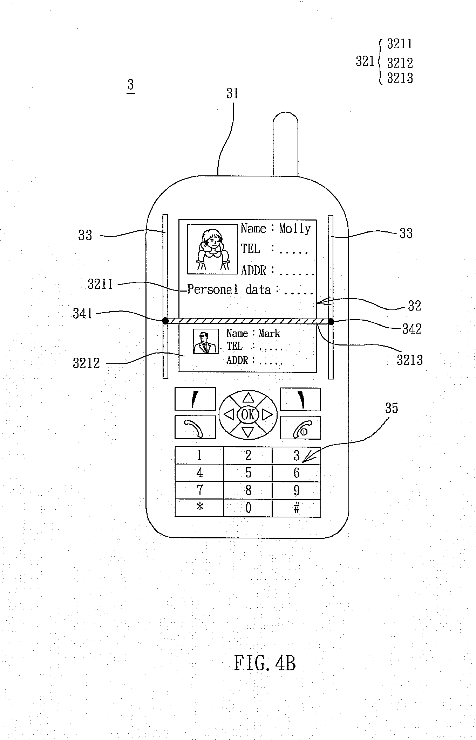

The arrangement of the sliding track 33 of this embodiment is not particularly restricted except that the sliding track 33 has to be disposed on one side of the case 31 and near the display module 32. So, when the single sliding track 33 is used, the sliding track 33 can be disposed on a left side or a right side of the case 31. In this example, the sliding track 33 is disposed on the left side of the display module 32 (see FIGS. 3A and 3B). In addition, when two sliding tracks 33 are used, the sliding tracks 33 can be respectively disposed on two opposite sides (e.g., left side and right side) of the display module 32, as shown in FIGS. 4A and 4B.

As shown in FIGS. 3A and 3B, the monitor adjusting key 34 of this embodiment is disposed on the sliding track 33 and can be moved up or down, and the monitor adjusting key 34 corresponds to and controls the separating line 3213. That is, when the monitor adjusting key 34 is moved on the sliding track 33, the separating line 3213 is moved relatively according to the control of the monitor adjusting key 34. In addition, the pattern of the monitor adjusting key 34 of this embodiment includes, without limitation, a rectangular shape (see FIGS. 3A and 3B) or a longitudinal shape (see FIGS. 4A and 4B). When the single sliding track 33 is used, as shown in FIGS. 3A and 3B, the monitor adjusting key 34 has the rectangular shape. When the two sliding tracks 33 are used, as shown in FIGS. 4A and 4B, the monitor adjusting key 34 has the longitudinal shape, crosses the display module 32 and has a first end portion 341 and a second end portion 342, both of which are disposed in each sliding track 33. In this case, the monitor adjusting key 34 covers the separating line 3213. When the monitor adjusting key 34 is moved up or down through the two sliding tracks 33, the separating line 3213 is also moved according to the control of the monitor adjusting key 34. However, because the monitor adjusting key 34 covers the separating line 3213, the separating line 3213 is not displayed.

The monitor adjusting key 34 of the mobile communication device of this embodiment operates as follows. When the monitor adjusting key 34 controls the separating line 3213 to move the separating line 3213 toward the first frame 3211, the area of the first frame 3211 on the display frame 321 decreases with the movement of the separating line 3213, and the display texts or display patterns on the first frame 3211 are relatively scaled down. Meanwhile, the area of the second frame 3212 on the display frame 321 increases, and the display texts or display patterns on the second frame 3212 are relatively scaled up, as shown in FIGS. 3A and 4A. When the separating line 3213 is moved toward the second frame 3212, the area of the second frame 3212 on the display frame 321 is also reduced therewith, and the display texts or display patterns on the second frame 3212 are relatively reduced with the scaling down of the second frame 3212. Meanwhile, the area of the first frame 3211 is scaled up due to the movement of the separating line 3213, and the display texts or display patterns on the first frame 3211 are also relatively scaled up with the scaling up of the area of the first frame 3211, as shown in FIGS. 3B and 4B.

In order to make the contents of the invention clearer, the operation of the mobile communication device according to the preferred embodiment of the invention will be described by taking a mobile phone as an example.

Please refer to FIGS. 3A to 4B. For example, when the user uses the mobile communication device, the first frame 3211 displays the name, picture and telephone number of Molly in the address book, and the second frame 3212 also displays another name, picture and telephone number of Mark in the address book. If the user wants to look for some data clearly, he or she can control the monitor adjusting key 34 to move so as to adjust the size of the first frame 3211 or the second frame 3212 and to scale up the display contents of the first frame 3211 or the second frame 3212 such that the data can be clearly found. When a single sliding track is used and the user wants to scale up the display contents of the second frame 3212 in the display frame 321, the user can easily move the monitor adjusting key 34 manually because the monitor adjusting key 34 is disposed on the sliding track 33. At this time, the separating line 3213 of the display frame 321 is controlled by the monitor adjusting key 34 and moved toward the first frame 3211 such that the display contents of the first frame 3211 are gradually scaled down. Meanwhile, the display patterns and the display texts on the second frame 3212 are gradually scaled up. So, the user can clearly see the scaled-up image of Mark's photo, contact information, and personal data (see FIG. 3A) on the second frame 3212. Similarly, if the user wants to look for the display contents of the first frame 3211, he or she can move the monitor adjusting key 34 to control the separating line 3213 to move toward the second frame 3212. At this time, the display contents of the second frame 3212 are gradually scaled down, but the displayed image of Molly's photo, contact information, and personal data on the first frame 3211 are gradually scaled up, so the user can clearly see the data. Likewise, when the mobile communication device 3 with two sliding tracks 33 are used, the user adjusts the monitor adjusting key 34 to slide on the two sliding tracks 33, as shown in FIGS. 4A and 4B, to achieve the above-mentioned effect.

According to the above-mentioned operations, as shown in FIGS. 3A to 4B, the user himself or herself can easily adjust the sizes of the first frame 3211 and the second frame 3212 using the monitor adjusting key 34. In addition, because the separating line 3213 is moved according to the movement of the monitor adjusting key 34, the sizes of the display contents can be adjusted simultaneously. So, it is very convenient to look for data and to operate the device.

In addition, the monitor adjusting key 34 may include a touch control area disposed on the top of the monitor adjusting key 34. In practice, the touch control area may be divided into several blocks, which are respectively short-cut keys. Alternatively, the touch control area may be simply a touch pad, so that the user can use the touch pad to control the cursor or to click desired items. Thus, the user can adjust the size of the first frame 3211 and the second frame 3212, and execute desired functions by utilizing the monitor adjusting key 34 only.

Referring again to FIGS. 3A to 4B, the mobile communication device 3 of this embodiment further includes an operation interface 35, which is disposed on the case 31 and near the display module 32, and is usually disposed below the display module 32. The operation interface 35 includes, without limitation, a plurality of keys.

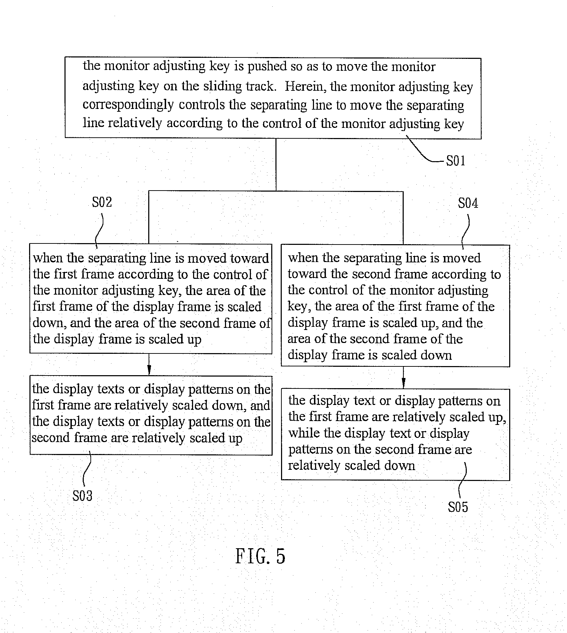

In addition, as shown in FIG. 5, the monitor adjusting method according to the preferred embodiment of the invention is used in the mobile communication device 3, as shown in FIGS. 3A to 4B, and includes the steps S01 to S05.

The mobile communication device has a case, a display module, at least one sliding track and a monitor adjusting key. The display module is disposed on the case. The display module displays a display frame. The display frame includes a first frame, a second frame and a separating line for separating the first frame from the second frame. The sliding track is disposed on one side of the case and near the display module. The monitor adjusting key is disposed on the sliding track.

First, in step S01, the monitor adjusting key is pushed so as to move the monitor adjusting key on the sliding track. Herein, the monitor adjusting key correspondingly controls the separating line to move the separating line relatively according to the control of the monitor adjusting key.

After that, when the monitor adjusting key is moved on the sliding track, steps S02 to S05 are performed.

Because the monitor adjusting key can be moved toward the first frame or the second frame, two implementations may occur.

When the monitor adjusting key is moved toward the first frame, steps S02 to S03 are performed.

In step S02, when the separating line is moved toward the first frame according to the control of the monitor adjusting key, the area of the first frame of the display frame is scaled down, and the area of the second frame of the display frame is scaled up.

At this time, in step S03, the display texts or display patterns on the first frame are relatively scaled down, and the display texts or display patterns on the second frame are relatively scaled up.

In addition, when the monitor adjusting key is moved toward the second frame, steps S04 to S05 are performed.

In step S04, when the separating line is moved toward the second frame according to the control of the monitor adjusting key, the area of the first frame of the display frame is scaled up, and the area of the second frame of the display frame is scaled down.

At this time, in step S05, the display text or display patterns on the first frame are relatively scaled up, while the display text or display patterns on the second frame are relatively scaled down. Because the monitor adjusting method according to the preferred embodiment of the invention can be applied to the mobile communication device 3, as shown in FIGS. 3A to 4B and the possible implementations and effects of the monitor adjusting method have been discussed in the mobile communication device 3, detailed descriptions thereof will be omitted.

In summary, the mobile communication device of the invention has the display module disposed on the case, and the separating line for dividing the display frame of the display module into the first frame and the second frame. In addition, the sliding track is disposed on one side of the case, and the monitor adjusting key disposed on the sliding track is utilized to adjust the separating line on the display module to scale up or down the first frame or the second frame. Compared with the prior art, the invention utilizes the monitor adjusting key to control the separating line on the display frame to move the separating line toward the first frame or the second frame. Furthermore, when the first frame is scaled down, the second frame is scaled up, and the display patterns or display texts on the second frame are scaled up, or vice versa. According to this method, the user can easily adjust the monitor adjusting key and adjust the size of the first frame or the second frame at will so as to look for the desired data quickly, clearly and conveniently.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A mobile communication device (3), comprising:
a case (31);
a display module (32), which is disposed on the case and displays a display frame including a first frame (3211), a second frame (3212) and a separating line (3213) for separating the first frame from the second frame;
at least one sliding track (33) disposed on one side of the case and near the display module; and
a monitor adjusting key (34) disposed on the sliding track, wherein the monitor adjusting key correspondingly controls the separating line (3213).

2. The device according to claim 1, wherein the separating line (3213) is moved relative to a movement of the monitor adjusting key (34) on the sliding track.

3. The device according to claim 1 or 2, wherein the mobile communication device has two sliding tracks (33) disposed on two opposite sides of the display module (32).

4. The device according to claim 3, wherein the monitor adjusting key (34) crosses the display module and has a first end portion (341) and a second end portion (342), and the first end portion and the second end portion are respectively disposed on the sliding tracks (33).

5. The device according to any of the preceding claims, wherein the monitor adjusting key (34) covers the separating line (3213).

6. The device according to any of claims 1 to 4, wherein the monitor adjusting key (34) comprises a touch control area.

7. The device according to any of the preceding claims, further comprising an operation interface (35) disposed on the case and near the display module.

8. The device according to any of the preceding claims, wherein the display module is a touch display module.

9. The device according to any of the preceding claims, wherein the mobile communication device (3) is a mobile phone or a personal digital assistant.

10. A monitor adjusting method applied to a mobile communication device (3), which has a case (31), a display module (32), at least one sliding track (33) and a monitor adjusting key (34), wherein the display module is disposed on the case, the display module displays a display frame, the display frame comprises a first frame (3211), a second frame (3212) and a separating line (3213) for separating the first frame from the second frame, the sliding track (33) is disposed on one side of the case and near the display module, the monitor adjusting key (34) is disposed on the sliding track, and the monitor adjusting method comprises the steps of:
moving the monitor adjusting key (34) on the sliding track (33), wherein the monitor adjusting key correspondingly controls the separating line (3213) to move the separating line according to the control of the monitor adjusting key;
when the separating line (3213) is moved toward the first frame (3211) according to the control of the monitor adjusting key, an area of the first frame of the display frame is scaled down, and an area of the second frame (3212) of the display frame is scaled up; and
when the separating line (3213) is moved toward the second frame according to the control of the monitor adjusting key, the area of the first frame (3211) of the display frame is scaled up, and the area of the second frame (3212) of the display frame is scaled down.

11. The method according to claim 10, wherein when the area of the first frame (3211) is scaled down and the area of the second frame (3212) is scaled up, a display text or a display pattern on the first frame is relatively scaled down, and a display text or a display pattern on the second frame is relatively scaled up.

12. The method according to claim 10, wherein when the area of the first frame (3211) is scaled up and the area of the second frame (3212) is scaled down, a display text or a display pattern on the first frame is relatively scaled up, and a display text or a display pattern on the second frame is relatively scaled down.

13. The method according to any of claims 10 to 12, wherein the mobile communication device (3) is a mobile phone or a personal digital assistant (PDA).
